# EUROPEAN PATENT SPECIFICATION

(11) **EP 3 683 455 B1**
(45) Date of publication and mention of the grant of the patent: **05.01.2022**
(21) Application number: 19213040.9
(22) Date of filing: 03.12.2019
(51) Int. Cl.: F16B 12/24, F16B 13/06

(54) **EXPANSION CONNECTOR**
ERWEITERUNGSVERBINDER
CONNECTEUR EXPANSIBLE

(30) Priority: 21.01.2019 CN 201910057315
(43) Date of publication of application: 22.07.2020
(73) Proprietor: Liu, Weiming, Qingyuan, Guangdong 511500 (CN)
(72) Inventor: Liu, Weiming, Qingyuan, Guangdong 511500 (CN)
(74) Representative: Lang, Christian

(56) References cited:
- WO-A1-2012/120488
- KR-A- 20140 003 938
- SE-L- 8 800 401

## Description

The disclosure relates to the field of mechanical fastening, and more particularly to a mechanical expansion connector.

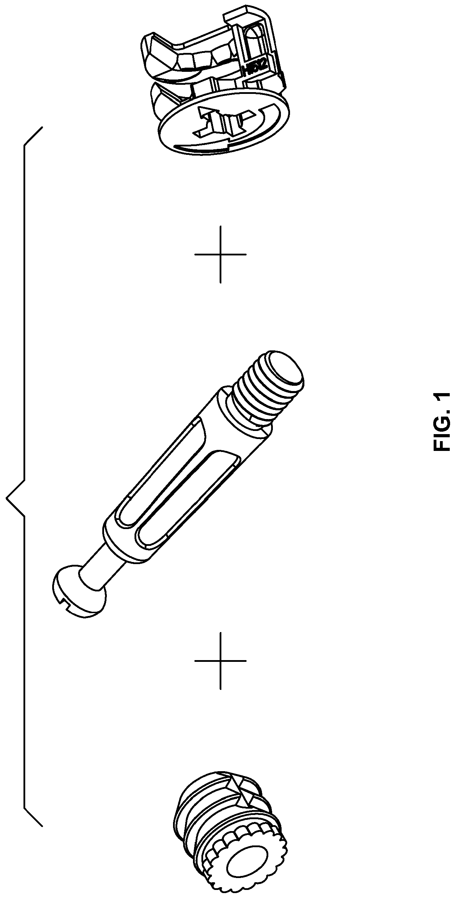

As shown in FIG. 1, a conventional eccentric connector includes at least an eccentric wheel, a connecting rod, and a pre-embedded nut. Specifically, the bottom torsion of the eccentric wheel deviates from the radian of the center of the circle. When rotating the cross-screw slot of the eccentric wheel through a corkscrew, the connecting rod in the radian will pull along the radian to the center of the eccentric wheel, thus tightening the distance between the eccentric wheel and the pre-embedded nut, thus strengthening the connection between the plates.

In an assembled conventional connector, there is a gap between the connecting rod and the eccentric wheel, so that the connecting rod tends to waggle, leading to connection instability. In addition, a conventional eccentric connector includes many parts, and this causes a relatively difficult installation.

KR 2014 0003938 A discloses an anchor bolt. The anchor bolt includes a bolt part having external threads, and a tapered part. In addition, the anchor bolt includes an expansion sleeve. The expansion sleeve includes at an upper end a plurality of first incision grooves; and includes at a lower end a plurality of second incision grooves and internal threads.

The disclosure provides an expansion connector that features firm connection and is easy to install and dismantle.

Provided is an expansion connector comprising a connecting rod and an expansion sleeve sheathed on the connecting rod; the expansion sleeve is a hollow cylindrical structure comprising a first end and a second end; the first end of the expansion sleeve comprises a first expansion part, and the second end comprises a second expansion part.

At least one first longitudinal slit is formed on the first expansion part and extends along the axial direction of the expansion sleeve.

At least one second longitudinal slit is formed on the second expansion part and extends along the axial direction of the expansion sleeve.

The first expansion part comprises an inner wall provided with internal threads; the connecting rod comprises a first end and a second end; the first end of the connecting rod comprises a threaded portion configured to expand the first expansion part; the threaded portion comprises external threads corresponding to the internal threads of the first expansion part by size; and the second end of the connecting rod comprises a head configured to expand the second expansion part.

The first expansion part comprises a cavity comprising a cylindrical hole and a tapered hole; the cylindrical hole, the tapered hole and the expansion sleeve are coaxial; the tapered hole is closer to the first end of the expansion sleeve than the cylindrical hole; the internal threads of the first expansion part extends along the direction from the cylindrical hole to the tapered hole; the diameter of the tapered hole decreases from the cylindrical hole to the first end of the expansion sleeve; and the at least one first longitudinal slit is formed around the tapered hole.

The outer diameter of the head of the connecting rod decreases along the direction from the second end to the first end of the expansion sleeve, and the cavity of the second expansion part matches the head of the connecting rod.

The head comprises an end face which is depressed to form a polygonal mounting hole.

The expansion connector further comprises an L-shaped rod, a cross-sectional shape of which is identical to that of the mounting hole.

The expansion sleeve comprises a first body and a second body fitted to each other, and the first body is integrated with the second body by a lock catch.

The first body and the second body of the expansion sleeve have the same structure; two sides of the first body and the second body are provided with fasteners; two pairs of fasteners are provided, and each fastener comprises an insert hole and a cog; the insert hole and the cog are disposed at two sides of the first body and the second body, respectively; the cog of the first body is embedded in the insert hole of the second body, and the cog of the second body is embedded in the insert hole of the first body, thus integrating the first body and the second body of the expansion sleeve.

One end of the cog is provided with a barb.

The expansion sleeve comprises a telescopic portion disposed between the first end and the second end, and the telescopic portion comprises a corrugated pipe.

The telescopic portion comprises at least one third longitudinal slit extending axially along the expansion sleeve.

The advantages of the expansion connector according to embodiments of the disclosure are as follows: 1) the first expansion part and the second expansion part are embedded in the material to be fastened (e.g., furniture), and pose no adverse effect on the appearance; 2) the connections between the first expansion part and the second expansion part and the material to be fastened are firm and reliable; 3) the expansion connector facilitates the assembly and disassembly of the material to be fastened, thus improving the work efficiency.
FIG. 1 is a schematic diagram of an eccentric connector in the related art;
FIG. 2 is a schematic diagram of an expansion connector as described in the disclosure;
FIG. 3 is a first exploded view of an expansion connector as described in the disclosure;
FIG. 4 is a second exploded view of an expansion connector as described in the disclosure; and
FIG. 5 is a schematic view showing the installation of an expansion connector as described in the disclosure.

To further illustrate, embodiments detailing an expansion connector are described below. It should be noted that the following embodiments are intended to describe and not to limit the disclosure.

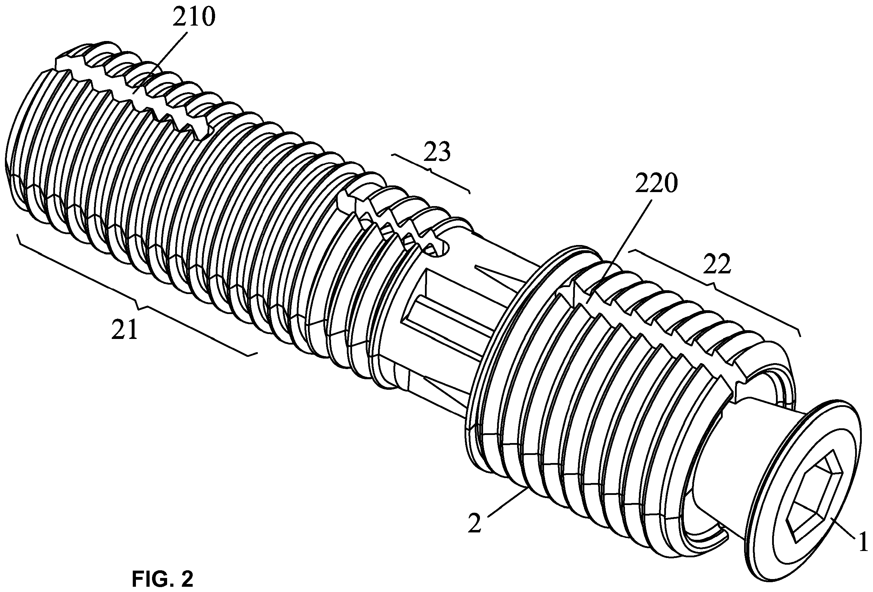

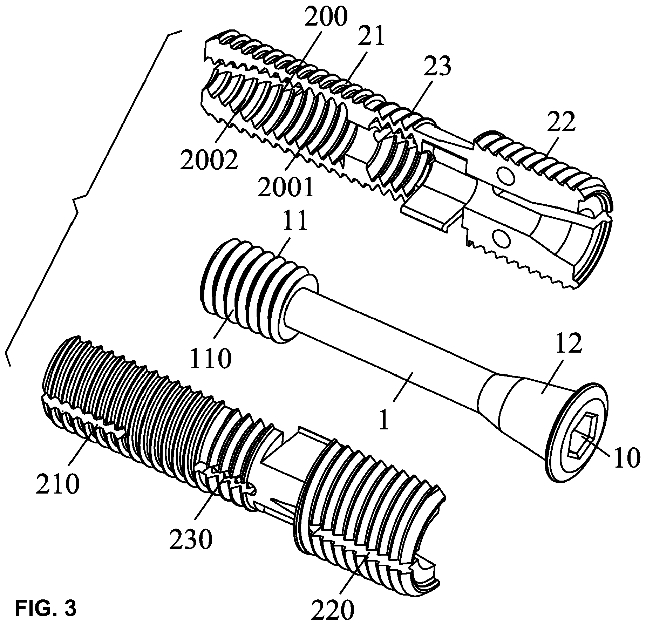

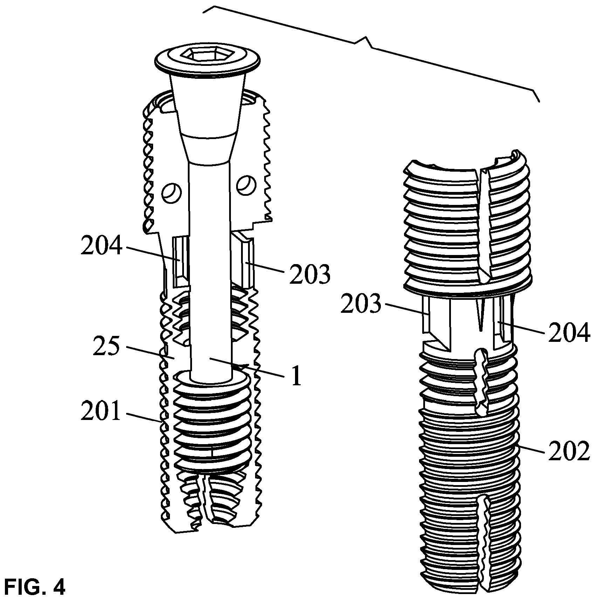

Referring to FIG. 1 to FIG. 5, an expansion connector comprises a connecting rod 1 and an expansion sleeve 2 sheathed on the connecting rod 1; the expansion sleeve 2 is a hollow cylindrical structure; the first end of the expansion sleeve 2 comprises a first expansion part 21, and the second end comprises a second expansion part 22; at least one first longitudinal slit 210 is formed on the first expansion part 21 and extends along the axial direction of the expansion sleeve 2. The first longitudinal slit 210 divides the first expansion part 21 into the expansion blocks that can expand outwards. At least one second longitudinal slit 220 is formed on the second expansion part 22 and extends along the axial direction of the expansion sleeve 2.

The first expansion part 21 comprises an inner wall provided with internal threads; the connecting rod 1 comprises a first end and a second end; the first end of the connecting rod comprises a threaded portion 11 configured to expand the first expansion part; the threaded portion 11 comprises external threads 110 corresponding to the internal threads of the first expansion part 21 by size; and the second end of the connecting rod 1 comprises a head 12 configured to expand the second expansion part 22.

The first expansion part comprises a cavity 200 which comprises a cylindrical hole 2001 and a tapered hole 2002; the cylindrical hole 2001, the tapered hole 2002 and the expansion sleeve 2 are coaxial; the tapered hole 2002 is closer to the first end of the expansion sleeve than the cylindrical hole 2001; the internal thread of the first expansion part 21 extends from the cylindrical hole 2001 to the tapered hole 2002, and the diameter of the tapered hole 2002 decreases along the direction in which the connecting rod 1 is screwed into the expansion sleeve 2, and the at least one first longitudinal slit 210 is formed around the tapered hole 2002.

The inner wall of the expansion sleeve in the inner side of the first expansion part 21 narrows to form a circular hole 25; the inner diameter of the circular hole 25 corresponds to the outer diameter of the connecting rod 1, and the connecting rod is embedded in and fixed by the circular hole 25.

The head 12 of the connecting rod is in the shape of a circular truncated cone; the outer diameter of the head 12 gradually reduces along the direction the connecting rod 1 is screwed into the expansion sleeve 2, and the cavity of the second expansion part 22 is identical to the shape of the head 12.

The end face of the head 12 has a mounting hole 10; the expansion connector further comprises an L-shaped rod, a cross-sectional shape of which is identical to that of the mounting hole 10. Preferably, the end face of the head 12 has a hexagonal mounting hole 10. The expansion connector further comprises a hexagonal key 3, which is an L-shaped hexagonal rod having a cross-sectional shape that is identical to the mounting hole 10. The cross-section of the mounting hole 10 and the hexagonal key 3 can also be designed as other polygons, or star or asterisk, as long as it can be screwed to the connecting rod.

The expansion sleeve 2 comprises a first body 201 and a second body 202 fitted to each other, and the first body 201 and the second body 202 can be integrated as a whole by a lock catch. The lock catch comprises fasteners, and the fasteners may be disposed on one end or in the middle of the expansion sleeve 2.

The fasteners each comprise an insert holes 204 and a cog 203; there are 2 pairs of fasteners in this example; the insert hole 204 and the cog 203 are disposed on both sides of the first body 201 and the second body 202, respectively; the cog 203 of the first body 201 is embedded in the insert hole 204 of the second body 202, and the cog 203 of the second body 202 is embedded in the insert hole of the first body 201, so that the first body 201 and the second body 202 of the expansion sleeve 2 are connected as a whole.

One end of the cog 203 is provided with a barb which is configured to prevent the cog 203 from sliding out of the insert hole 204.

The middle portion of the expansion sleeve 2 is provided with a telescopic portion 23 which employs a corrugated pipe, and the telescopic portion 23 strengthens the connection between the two wooded boards.

The telescopic portion 23 comprises at least one third longitudinal slit 230 extending axially along the expansion sleeve 2. When the connecting rod interacts with the expansion sleeve, the third longitudinal slit 230 enables the expansion part 23 to expand radially outwardly. This strengthens the connection.

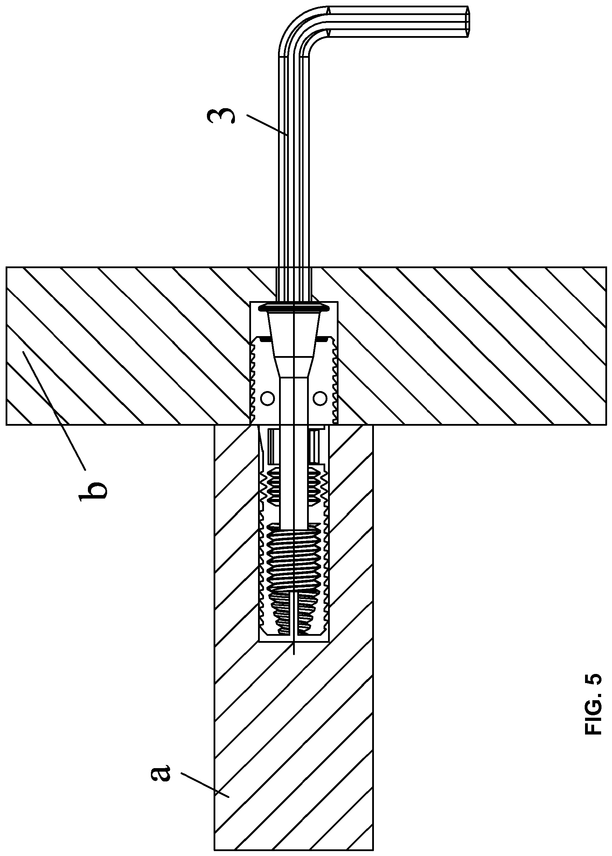

The usage method and working principle of the expansion connector are as follows:
1. as shown in FIG. 5, punching holes in the wooden board a and the wood b to be connected;
2. sleeving the expansion sleeve 2 on the connecting rod 1, and matching the threaded portion of the connecting rod 1 with the internal thread in the cylindrical hole 2001 of the expansion sleeve 2;
3. embedding one end of the expansion connector in the mounting hole of the wooden board a, embedding the other end thereof in the mounting hole of the wooden board b, and using the hexagonal key to pass through the wooden board b to align with the hexagonal mounting hole 10 of the head of the connecting rod;
4. turning the hexagonal key to drive the connecting rod to rotate;
5. the inclination of the head 12 of the connecting rod causes the second expansion part 22 to expand to firmly lock the wooden board b;
6. continue to screw in the connecting rod 1 so that the first expansion part 21 expands to firmly lock the wooden board a;
7. continue to screw in the connecting rod 1 to drive the telescopic portion 23 of the expansion sleeve 2 to stretch; the two wooden boards are contracted and close to each other under the restoring force of the telescopic portion 23; in addition, when the connecting rod 1 and the expansion sleeve 2 are engaged with each other, the telescopic portion 23 is axially compressed, and the third longitudinal slit 230 is expanded to drive the telescopic portion 23 to expand radially outwards to fill the gap between the expansion sleeve and the wooded board thus strengthening the connection.

It will be obvious to those skilled in the art that changes and modifications may be made, and therefore, the aim in the appended claims is to cover all such changes and modifications.

## Claims

1. An expansion connector, comprising a connecting rod (1) and an expansion sleeve (2) sheathed on the connecting rod (1); **wherein:**
the expansion sleeve (2) is a hollow cylindrical structure comprising a first end and a second end; the first end of the expansion sleeve (2) comprises a first expansion part (21), and the second end comprises a second expansion part (22);
at least one first longitudinal slit (210) is formed on the first expansion part (21) and extends along an axial direction of the expansion sleeve (2);
at least one second longitudinal slit (220) is formed on the second expansion part (22) and extends along the axial direction of the expansion sleeve (2); and
the first expansion part (21) comprises an inner wall provided with internal threads; the connecting rod (1) comprises a first end and a second end; the first end of the connecting rod (1) comprises a threaded portion (11) configured to expand the first expansion part (21); the threaded portion (11) comprises external threads (110) corresponding to the internal threads of the first expansion part (21) by size; and the second end of the connecting rod (1) comprises a head (12) configured to expand the second expansion part (22);
**characterized in that** the expansion sleeve (2) comprises a telescopic portion (23) disposed between the first end and the second end, and the telescopic portion (23) comprises a corrugated pipe.

2. The connector of claim 1, **characterized in that** the first expansion part (21) comprises a cavity (200) comprising a cylindrical hole (2001) and a tapered hole (2002); the cylindrical hole (2001), the tapered hole (2002) and the expansion sleeve (2) are coaxial; the tapered hole (2002) is closer to the first end of the expansion sleeve (2) than the cylindrical hole (2001); the internal threads of the first expansion part (21) extends along a direction from the cylindrical hole (2001) to the tapered hole (2002); a diameter of the tapered hole (2002) decreases from the cylindrical hole (2001) to the first end of the expansion sleeve (2); and the at least one first longitudinal slit (210) is formed around the tapered hole (2002).

3. The connector of claim 2, **characterized in that** an outer diameter of the head (12) of the connecting rod (1) decreases along a direction from the second end to the first end of the expansion sleeve (2), and the cavity of the second expansion part (22) matches the head (12) of the connecting rod (1).

4. The connector of claim 1, **characterized in that** the head (12) comprises an end face which is depressed to form a polygonal mounting hole (10).

5. The connector of claim 4, further comprising an L-shaped rod, a cross-sectional shape of which is identical to that of the mounting hole (10).

6. The connector of claim 1, **characterized in that** the expansion sleeve (2) comprises a first body (201) and a second body (202) fitted to each other, and the first body (201) is integrated with the second body (202) by a lock catch.

7. The connector of claim 6, **characterized in that** the first body (201) and the second body (202) of the expansion sleeve (2) are structurally identical; two sides of the first body (201) and two sides of the second body (202) are totally provided with two pairs of fasteners; each fastener comprises an insert hole (204) and a cog (203); the insert hole (204) and the cog (203) are disposed at two sides of the first body (201) and the second body (202), respectively; the cog (203) of the first body (201) is embedded in the insert hole (204) of the second body (202), and the cog (203) of the second body (202) is embedded in the insert hole (204) of the first body (201).

8. The connector of claim 7, **characterized in that** one end of the cog (203) is provided with a barb.

9. The connector of claim 1, **characterized in that** the telescopic portion (23) comprises at least one third longitudinal slit (230) extending axially along the expansion sleeve (2).

## Patentansprüche

1. Spreizverbinder, umfassend eine Pleuelstange (1) und eine Spreizhülle (2), die die Pleuelstange (1) umhüllt; **wobei:**
die Spreizhülle (2) eine hohle, zylindrische Struktur ist, die ein erstes Ende und ein zweites Ende umfasst; das erste Ende der Spreizhülle (2) einen ersten Spreizteil (21) umfasst und das zweite Ende einen zweiten Spreizteil (22) umfasst;
mindestens ein erster länglicher Schlitz (210) an dem ersten Spreizteil (21) gebildet ist und sich entlang einer axialen Richtung der Spreizhülle (2) erstreckt;
mindestens ein zweiter länglicher Schlitz (220) an dem zweiten Spreizteil (22) gebildet ist und sich entlang der axialen Richtung der Spreizhülle (2) erstreckt; und
der erste Spreizteil (21) eine mit Innengewinde versehene Innenwand umfasst; die Pleuelstange (1) ein erstes Ende und ein zweites Ende umfasst; das erste Ende der Pleuelstange (1) einen Gewindeabschnitt (11) umfasst, der konfiguriert ist, um den ersten Spreizteil (21) zu spreizen; der Gewindeabschnitt (11) Außengewinde (110) umfasst, die den Innengewinde des ersten Spreizteils (21) nach Größe entsprechen; und das zweite Ende der Pleuelstange (1) einen Kopf (12) umfasst, der konfiguriert ist, um den zweiten Spreizteil (22) zu spreizen;
**dadurch gekennzeichnet, dass** die Spreizhülle (2) einen Teleskopabschnitt (23) umfasst, der zwischen dem ersten Ende und dem zweiten Ende angeordnet ist, und der Teleskopabschnitt (23) ein Wellrohr umfasst.

2. Verbinder nach Anspruch 1, **dadurch gekennzeichnet, dass** der erste Spreizteil (21) einen Hohlraum (200) umfasst, der eine zylindrische Bohrung (2001) und eine konische Bohrung (2002) umfasst; die zylindrische Bohrung (2001), die konische Bohrung (2002) und die Spreizhülle (2) koaxial sind; die konische Bohrung (2002) näher an dem ersten Ende der Spreizhülle (2) ist als die zylindrische Bohrung (2001); die Innengewinde des ersten Spreizteils (21) sich entlang einer Richtung von der zylindrischen Bohrung (2001) zur konischen Bohrung (2002) erstrecken; ein Durchmesser der konischen Bohrung (2002) sich von der zylindrischen Bohrung (2001) zum ersten Ende der Spreizhülle (2) verringert; und der mindestens eine erste längliche Schlitz (210) um die konische Bohrung (2002) gebildet ist.

3. Verbinder nach Anspruch 2, **dadurch gekennzeichnet, dass** ein Außendurchmesser des Kopfes (12) der Pleuelstange (1) sich entlang einer Richtung vom zweiten Ende zum ersten Ende der Spreizhülle (2) verringert und der Hohlraum des zweiten Spreizteils (22) mit dem Kopf (12) der Pleuelstange (1) zusammenpasst.

4. Verbinder nach Anspruch 1, **dadurch gekennzeichnet, dass** der Kopf (12) eine Endfläche umfasst, die vertieft ist, um eine polygonale Montagebohrung (10) zu bilden.

5. Verbinder nach Anspruch 4, ferner umfassend eine L-förmige Stange, deren Querschnittsform mit der der Montagebohrung (10) identisch ist.

6. Verbinder nach Anspruch 1, **dadurch gekennzeichnet, dass** die Spreizhülle (2) einen ersten Körper (201) und einen zweiten Körper (202) umfasst, die aneinander befestigt sind, und der erste Körper (201) durch eine Schlossfalle in den zweiten Körper (202) integriert ist.

7. Verbinder nach Anspruch 6, **dadurch gekennzeichnet, dass** der erste Körper (201) und der zweite Körper (202) der Spreizhülle (2) strukturell identisch sind; zwei Seiten des ersten Körpers (201) und zwei Seiten des zweiten Körpers (202) gänzlich mit zwei Paar Befestigungselementen versehen sind; jedes Befestigungselement eine Einsteckbohrung (204) und ein Zahnrad (203) umfasst; die Einsteckbohrung (204) und das Zahnrad (203) an zwei Seiten des ersten Körpers (201) bzw. des zweiten Körpers (202) angeordnet sind; das Zahnrad (203) des ersten Körpers (201) in die Einsteckbohrung (204) des zweiten Körpers (202) eingebettet ist und das Zahnrad (203) des zweiten Körpers (202) in die Einsteckbohrung (204) des ersten Körpers (201) eingebettet ist.

8. Verbinder nach Anspruch 7, **dadurch gekennzeichnet, dass** ein Ende des Zahnrads (203) mit einem Widerhaken versehen ist.

9. Verbinder nach Anspruch 1, **dadurch gekennzeichnet, dass** der Teleskopabschnitt (23) mindestens einen dritten länglichen Schlitz (230) umfasst, der sich axial entlang der Spreizhülle (2) erstreckt.

## Revendications

1. Connecteur à expansion, comprenant une tige de connexion (1) et un manchon à expansion (2) enfilé sur la tige de connexion (1) ; dans lequel :
le manchon à expansion (2) est une structure cylindrique creuse comprenant une première extrémité et une deuxième extrémité ; la première extrémité du manchon à expansion (2) comprend une première partie d'expansion (21) et la deuxième extrémité comprend une deuxième partie d'expansion (22) ;
au moins une première fente longitudinale (210) est formée sur la première partie d'expansion (21) et s'étend le long d'une direction axiale du manchon à expansion (2) ;
au moins une deuxième fente longitudinale (220) est formée sur la deuxième partie d'expansion (22) et s'étend le long de la direction axiale du manchon à expansion (2) ; et
la première partie d'expansion (21) comprend une paroi intérieure pourvue de filetages ; la tige de connexion (1) comprend une première extrémité et une deuxième extrémité ; la première extrémité de la tige de connexion (1) comprend une partie filetée (11) configurée pour élargir la première partie d'expansion (21) ; la partie filetée (11) comprend des filetages externes (110) correspondant aux filetages internes de la première partie d'expansion (21) en taille ; et la deuxième extrémité de la tige de connexion (1) comprend une tête (12) configurée pour élargir la deuxième partie d'expansion (22) ;
**caractérisé en ce que** le manchon à expansion (2) comprend une partie télescopique (23) disposée entre la première extrémité et la deuxième extrémité, et la partie télescopique (23) comprend un tuyau cannelé.

2. Connecteur selon la revendication 1, **caractérisé en ce que** la première partie d'expansion (21) comprend une cavité (200) comprenant un trou cylindrique (2001) et un trou conique (2002) ; le trou cylindrique (2001), le trou conique (2002) et le manchon à expansion (2) sont coaxiaux ; le trou conique (2002) est plus proche de la première extrémité du manchon à expansion (2) que le trou cylindrique (2001) ; les filetages internes de la première partie d'expansion (21) s'étendent le long d'une direction allant du trou cylindrique (2001) au trou conique (2002) ; un diamètre du trou conique (2002) diminue à partir du trou cylindrique (2001) vers la première extrémité du manchon à expansion (2) ; et l'au moins une première fente longitudinale (210) est formée autour du trou conique (2002).

3. Connecteur selon la revendication 2, **caractérisé en ce qu'**un diamètre extérieur de la tête (12) de la tige de connexion (1) diminue le long d'une direction allant de la deuxième extrémité à la première extrémité du manchon à expansion (2), et la cavité de la deuxième partie d'expansion (22) correspond à la tête (12) de la tige de connexion (1).

4. Connecteur selon la revendication 1, **caractérisé en ce que** la tête (12) comprend une face d'extrémité renfoncée pour former un trou de montage polygonal (10).

5. Connecteur selon la revendication 4, comprenant en outre une tige en forme de L, dont une forme de section transversale est identique à celle du trou de montage (10).

6. Connecteur selon la revendication 1, **caractérisé en ce que** le manchon à expansion (2) comprend un premier corps (201) et un deuxième corps (202) ajustés entre eux, et le premier corps (201) est intégré au deuxième corps (202) par un loquet de verrouillage.

7. Connecteur selon la revendication 6, **caractérisé en ce que** le premier corps (201) et le deuxième corps (202) du manchon à expansion (2) sont structurellement identiques ; deux côtés du premier corps (201) et deux côtés du deuxième corps (202) sont pourvus de deux paires de moyens de fixation ; chaque moyen de fixation comprend un trou d'insertion (204) et un pignon (203) ; le trou d'insertion (204) et le pignon (203) sont disposés sur deux côtés du premier corps (201) et du deuxième corps (202), respectivement ; le pignon (203) du premier corps (201) est incorporé dans le trou d'insertion (204) du deuxième corps (202), et le pignon (203) du deuxième corps (202) est incorporé dans le trou d'insertion (204) du premier corps (201).

8. Connecteur selon la revendication 7, **caractérisé en ce qu'**une extrémité du pignon (203) est dotée d'un crochet.

9. Connecteur selon la revendication 1, **caractérisé en ce que** la partie télescopique (23) comprend au moins une troisième fente longitudinale (230) s'étendant axialement le long du manchon à expansion (2).
